# EUROPÄISCHE PATENTANMELDUNG

(11) **EP 0 617 254 A1**
(43) Veröffentlichungstag der Anmeldung: **28.09.1994**
(21) Anmeldenummer: 93104960.5
(22) Anmeldetag: 25.03.1993
(51) Int. Cl.: G01B 11/06, G01B 11/24, G01B 11/02

(54) **Verfahren und Einrichtung zur Dickenbestimmung an Radkränzen oder Bandagen von Rädern von Eisenbahnradsätzen**

(71) Anmelder: Wilhelm Hegenscheidt Gesellschaft mbH, D-41804 Erkelenz (DE)
(72) Erfinder: Coenen, Wilfried, Dr. Ing., W-4050 Mönchengladbach 4 (DE)
(74) Vertreter: Mayer-Pohske, Joachim-Wolfgang

(57) **Zusammenfassung**

Die Erfindung betrifft ein Verfahren zur Dickenbestimmung an Radkränzen oder Bandagen von Rädern von Eisenbahnradsätzen. Zur Bestimmung dieser Dicke wird vorgeschlagen, daß die für eine zu bestimmende Dicke relevanten Umrißzonen des Rades je mittels eines Lichtschnittes oder einer Lichtkante beleuchtet und die hierdurch entstehende Lichtspur optisch erfaßt, anschließend digitalisiert und aus den digitalisierten Werten die Dicke bestimmt wird. Hierbei soll die Lichtkante vorzugsweise radial verlaufen.

## Beschreibung

Die Erfindung betrifft ein Verfahren und eine Einrichtung zur Dickenbestimmung an Radkränzen oder Bandagen von Rädern von Eisenbahnradsätzen.

Meßgeräte zum Messen der Radkranzdicke oder Bandagendicke an Rädern von Eisenbahnradsätzen sind seit langem bekannt. Es handelt sich hierbei z. B. um die amerikanische "Standard Wheel Gauge".

Dieses Meßmittel wird manuell eingesetzt, indem es an die der Spurkranzfläche angeschlossenen Planflächen angelegt wird und mit Tastfingern an die Lauffläche und die Spurkranzkehle oder an die Lauffläche und die Bördelringzone anstößt. Die vorhandene Radkranzdicke oder Bandagendicke kann an einer Skala direkt abgelesen werden.

Solche Messungen können nur an ruhenden, d. h. nicht bewegten Radsätzen durchgeführt werden. Die Radsätze können im Fahrzeug eingebaut oder auch ausgebaut sein.

Für den Einsatz dieser Meßgeräte ist geschultes Personal notwendig. Die so erhaltenen Meßwerte sind zu notieren, um anschließend erst bewertet werden zu können. Eine vorbeugende Prüfung von eingebauten Radsätzen ist nur mit hohem Zeitaufwand möglich.

Eine andere Art der Feststellung der Radkranzdicke ist an Rädern mit eingestochener Kennrille möglich. Diese Räder tragen auf der der Spurkranzseite gegenüberliegenden ringförmigen Planfläche einer oder mehrere Kennrillen.

An diesen Rädern ist durch Besichtigung eine "gut/nicht gut"-Aussage möglich. Ein echter Meßwert ist so nicht zu erhalten und am Übergang von der Lauffläche des Rades zur Planfläche verhindert vielfach ein herausgewalzter Grat eine zuverlässige Bewertung.

Es sind außerdem Radsatzmeßstände bekannt, bei denen zur Erfassung des Radprofils der Räder eines Eisenbahnradsatzes der Radsatz im ausgebauten Zustand zwischen Körnerspitzen aufgenommen wird. Das Radprofil eines jeden Rades wird dann tangential mit einem planparallelen Lichtbündel beleuchtet und ein vom Profil des Rades erzeugtes Schattenbild mit einem als Profillinie vorgegebenen Sollprofil verglichen, und es werden die Abweichungen vom Sollprofil festgestellt und der Beurteilung des Profils zugrundegelegt. Diese Meßstände können keine Messungen der Radkranz- bzw. der Bandagendicke an Rädern von Radsätzen durchführen. Auch eine Messung der Restdicke eines Radkranzes bei Radsätzen mit Rädern, die eine eingestochene Kennrille tragen, ist nicht möglich.

Der Erfindung liegt die Aufgabe zugrunde, ein Verfahren vorzuschlagen, mit dem es möglich ist, Räder mindestens von im Fahrzeug eingebauten Radsätzen hinsichtlich ihrer Radkranzdicke bzw. Bandagendicke zu vermessen. Diese Messung soll automatisch, berührungslos und während des Abrollens der Radsätze oder Räder in einer Meßstrecke erfolgen. Hierbei soll als Meßergebnis mindestens ein Befund "gut/nicht gut" erreicht werden. Weiterhin soll nach der Erfindung eine Einrichtung zur Durchführung des genannten Verfahrens vorgeschlagen werden.

Verfahrensmäßig wird diese Aufgabe dadurch gelöst, daß die für eine zu bestimmende Dicke relevanten Umrißzonen des Rades je mittels eines Lichtschnittes oder einer Lichtkante beleuchtet und die hierdurch entstehende Lichtspur optisch erfaßt, anschließend digitalisiert und aus den digitalisierten Werten die Dicke bestimmt wird.

Beleuchtungseinrichtungen, die einen Lichtschnitt oder eine Lichtkante auf einer von ihnen beleuchteten Oberfläche erzeugen, sind bekannt und es ist ebenfalls bekannt, die bei einer solchen Beleuchtung erkennbare Kontur über eine Kamera zu erfassen und auszuwerten. Hierzu sei verwiesen auf den Aufsatz "Qualitätskontrolle durch automatische Sichtprüfung" aus MESSEN UND PRÜFEN, (Sonderdruck aus Band 20, 1964) Heft 6. Die hierdurch bekannten Verfahrensweisen und die zur Durchführung entwickelten Vorrichtungen haben jedoch immer ein stationär angeordnetes Objekt vermessen. Hierbei wurde ein sich gerade erstreckendes Werkstück entlang seiner Längserstreckung an unterschiedlichen Stellen hinsichtlich seines sich quer zur Längsrichtung verlaufenden Profils abgetastet. Es ist dies jedoch ein Profil, welches für einen Lichtschnitt- oder eine Lichtkantenbeleuchtung und der Betrachtung über eine Abbildungsoptik einfach zugänglich ist, ohne verdeckte Bereiche. Bei dem erfindungsgemäßen Verfahren erfolgt die Beleuchtung vorzugsweise so, daß der Lichtschnitt radial verläuft, wodurch die Dickenbestimmung vereinfacht wird. Aber auch bei einem z. B. schräg angelegten Lichtschnitt kann auf die richtige Dicke zurückgerechnet werden.

Das erfindungsgemäße Verfahren ermöglicht die Vermessung der Radkranzdicke oder Bandagendicke z. B. an Rädern mit eingestochenen Kennrillen und während der Bewegung solcher Räder auf der Schiene, bei Bedarf auch im ausgebauten Zustand und auch in stationärer Anordnung, z. B. bei einer Aufnahme zwischen Körnerspitzen auf einer Meßmaschine oder auf einer Drehbank. Sowie sich die Räder auf zugeordneten Schienen bewegen, muß durch geeignete und an sich bekannte Mittel die für die Messung richtige Position erfaßt und in dieser Position die Messung ausgelöst werden.

Eine erfindungsgemäße Einrichtung zur Durchführung des Verfahrens umfaßt Mittel zum Tragen des Eisenbahnradsatzes sowie mindestens eine Beleuchtungseinrichtung zur Erzeugung eines Lichtschnittes oder einer Lichtkante und mindestens eine für die Erfassung des Lichtschnittes oder der Lichtkante zugeordnete Empfangsoptik, die mit einer Digitalisierungseinrichtung und einer Auswerteeinrichtung verbunden ist, wobei jede Beleuchtungseinrichtung mit der zugeordneten Empfangsoptik relativ zu den Mitteln zum Tragen des Eisenbahnradsatzes so angeordnet sind, daß die für eine zu bestimmende Dicke relevanten Umrißzonen mit dem Lichtschnitt oder der Lichtkante beleuchtbar sind.

Mit einer solchen Ausgestaltung der erfindungsgemäßen Einrichtung wird es möglich, Meßgeräte und zu messendes Objekt abgestützt in die richtige relative Lage zueinander zu bringen, zu halten und in dieser Lage zu messen, in der sich die Rotationsachse des Rades bzw. des Radsatzes mindestens angenähert senkrecht über dem erzeugten Lichtschnitt oder der Lichtkante wenn dieser bzw. diese radial verläuft, befindet, denn dann ist der erzeugte Lichtschnitt der relevanten Umrißzonen, die die Planflächen enthalten, am Rad aufnehmbar. Diese Position ist definiert durch eine längs der Rotationsachse des Rades oder des Radsatzes verlaufende senkrechte Ebene, die durch den Schnittpunkt der optischen Achsen von Beleuchtungseinrichtung und Empfangseinrichtung verläuft.

Die Mittel zum Tragen des Radsatzes können je Rad eine Schiene sein, die beispielsweise rechteckig ausgebildet sein kann und das Rad an der äußeren Lauffläche unterstützt, so daß der Bereich der Meßkreisebene für eine Beleuchtung frei ist.

Bei ausgebauten Radsätzen können die Mittel zum Tragen des Radsatzes auch Körnerspitzen sein, die den Radsatz an seiner Radsatzwelle aufnehmen.

Die Lichtstrahlen der Beleuchtungseinrichtung können direkt auf das Objekt gerichtet sein oder auch über Umlenkspiegel, die voll reflektierend oder halbdurchlässig sein können, auf die relevanten Umrißzonen gelenkt werden.

Die Erfindung soll nun anhand der beigefügten Zeichnungen näher erläutert werden.

Es zeigen:
- Figur 1:: Schematischer Aufbau von Beleuchtungsmittel mit Empfangsoptiken an einem Eisenbahnrad
- Figur 2:: Aufbau in Seitenansicht am geschnittenen Rad mit Tragmittel
- Figur 3:: Seitenansicht von Fig. 2 in Blickrichtung des Pfeils C mit näherer Darstellung einer Justageeinrichtung
- Figur 4:: Darstellung einer Meßeinrichtung in einer Meßstrecke
- Figur 5:: Darstellung einer Kennrille
- Figur 6:: Darstellung einer Kennrille
- Figur 7:: Darstellung einer Meßeinrichtung mit Umlenkspiegeln
- Figur 8:: Darstellung einer Meßeinrichtung auf einer Drehmaschine
- Figur 9:: Darstellung einer Meßeinrichtung auf einer Drehmaschine
- Figur 10:: Schematischer Aufbau der Rechneranlage mit Kameras für beide Räder eines Radsatzes, dem Kamerainterface zum Zentralrechner, dem Massenspeicher und als Ausgabeeinheit ein Terminal
- Figur 11:: Darstellung der Datenauswertung im Rechner für ein Vollrad
- Figur 12:: Darstellung einer Bandage
- Figur 13:: Schematischer Aufbau einer Meßeinrichtung für ein Rad mit einer Bandage
- Figur 14:: Darstellung der Datenauswertung im Rechner für ein Rad mit Bandage

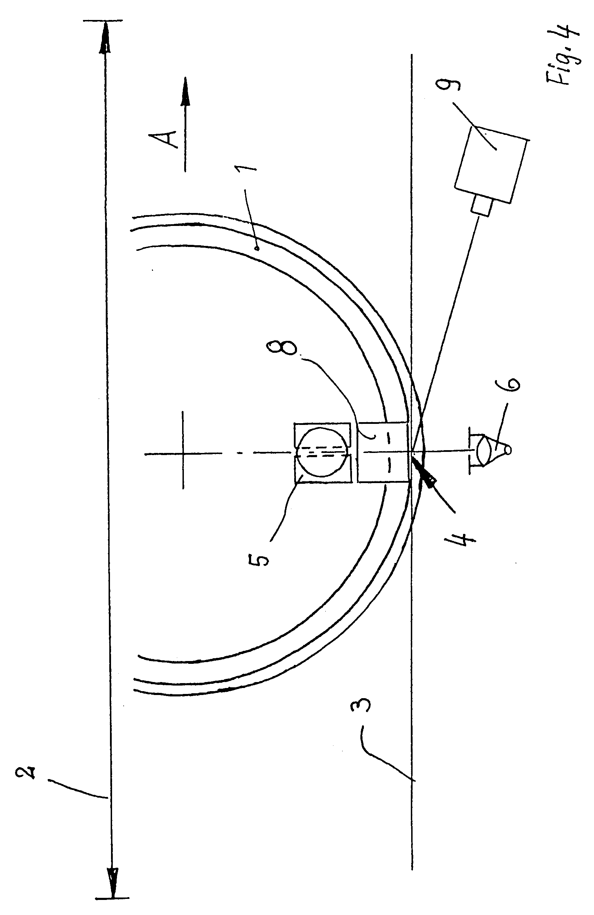

Figur 4 zeigt ein Rad 1 in einer Meßstrecke 2, wobei es sich in Pfeilrichtung A auf einer Bewegungsebene 3 als Mittel zum Tragen des Eisenbahnradsatzes bewegt und sich momentan in einer Meßposition 4 befindet. In dieser Meßposition 4 wird das Rad 1 von den Beleuchtungseinrichtungen 5, 6 an den relevanten Umrißzonen mit Lichtschnitten beleuchtet und diese Lichtschnitte werden von den Kameras 8, 9 aufgenommen.

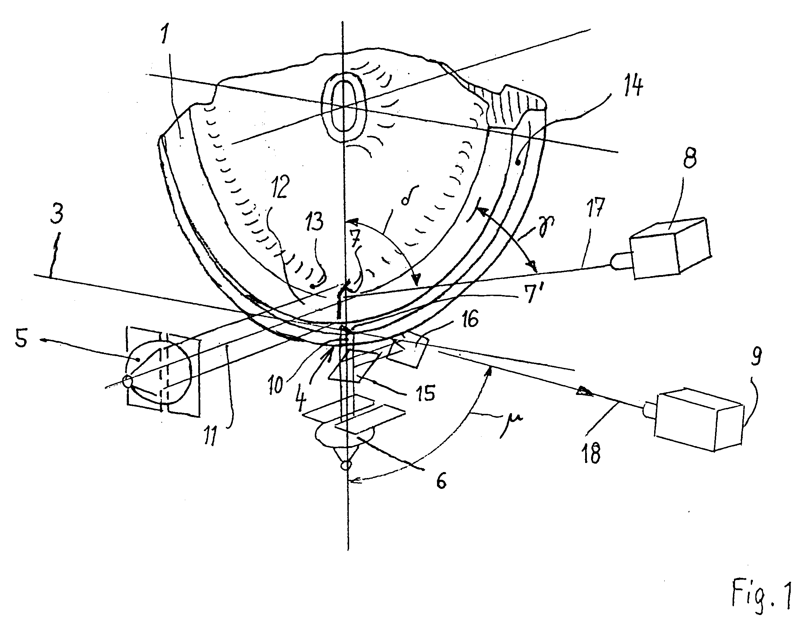

Figur 1 zeigt ebenfalls das Rad 1, jedoch in perspektivischer Ansicht. Das Rad 1 befindet sich auf der genannten Bewegungsebene 3 in der Meßposition 4, wie oben bereits beschrieben. In dieser Meßposition 4 wird der Meßvorgang ausgelöst. Dies kann z. B. durch Schienenschalter (nicht dargestellt) erfolgen. Schienenschalter gibt es in den unterschiedlichsten Ausführungen. Sie haben sich gut bewährt. Nach Auslösung des Meßvorganges werden die relevanten Umrißzonen des Rades von den Lichtstrahlen 10, 11 der Beleuchtungseinrichtungen 5, 6 beleuchtet und diese erzeugen auf der Planfläche 12, der Zylinder- oder Kegelfläche 13 und der Lauffläche 14 des Rades 1 je einen Lichtschnitt 7, 7' bzw. eine Lichtkante, in der Figur dargestellt durch die dick ausgezogenen Linien.

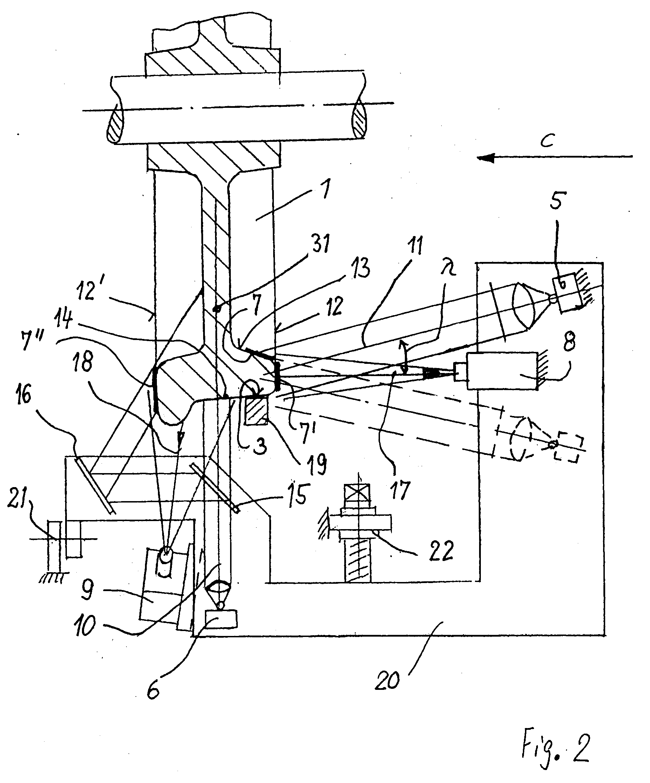

Die Beleuchtungseinrichtung 5 erzeugt einen Lichtschnitt auf der Planfläche 12 und auf der Zylinder- oder Kegelfläche 13. Die Beleuchtungseinrichtung 6 erzeugt einen Lichtschnitt auf der Lauffläche 14 und auf der Planfläche 12', siehe Figur 2. Um dies zu erreichen, wird in diesem Ausführungsbeispiel der Lichtstrahl 10 durch die Spiegel 15 und 16 umgelenkt.

Die Kamera 8 nimmt die Lichtspur auf der Planfläche 12 und der Zylinder- bzw. Kegelfläche 13 auf. Hierzu ist die Kamera mit ihrer optischen Achse 17 unter den Winkeln Gamma und Delta zum Rad ausgerichtet und zwar so, daß die Lichtspur bzw. remittierte Strahlung des Lichtschnittes ausreichend deutlich und nicht durch die Radgestalt behindert erfaßt werden kann.

Die Kamera 9 erfaßt die Lichtspur auf der Lauffläche 14 und auf der Planfläche 12'. Hierzu ist die Kamera 6 mit ihrer optischen Achse 18 unter dem Winkel Mü zum Rad ausgerichtet angeordnet und das wiederum so, daß die remittierte Strahlung des Lichtschnittes der Lauffläche und der Planfläche 12' sicher erfaßt und abgebildet wird.

Figur 2 zeigt ein Rad eines Radsatzes in geschnittener Darstellung auf der Schiene 19, deren obere Fläche die Bewegungsebene 3 bildet und die am äußeren Bereich der Lauffläche 14 das Rad 1 abstützt.

Die Beleuchtungseinrichtungen 5, 6 sind auf einem Träger 20 befestigt, ebenso die Kameras 8, 9. Am Träger 20 sind außerdem die Spiegel 15, 16 befestigt. Der Lichtstrahl 10 beleuchtet die Lauffläche 14 und über den halbdurchlässigen Spiegel 15 und den vollreflektierenden Spiegel 16 die Planfläche 12'. Die Beleuchtungseinrichtung 5 beleuchtet die Planfläche 12 und die Fläche 13. Damit diese Flächen günstig beleuchtet werden können, ist die optische Achse des Lichtstrahles 11 zur Planfläche 12 etwas geneigt.

Die Lichtschnitte bzw. die Lichtkanten, die von den Beleuchtungseinrichtungen erzeugt werden, werden von den Kameras 8, 9 aufgenommen und abgebildet. Die optischen Achsen 17, 18 der Kameras 8, 9 sind so geneigt, daß die erforderlichen Lichtkanten erfaßt werden können.

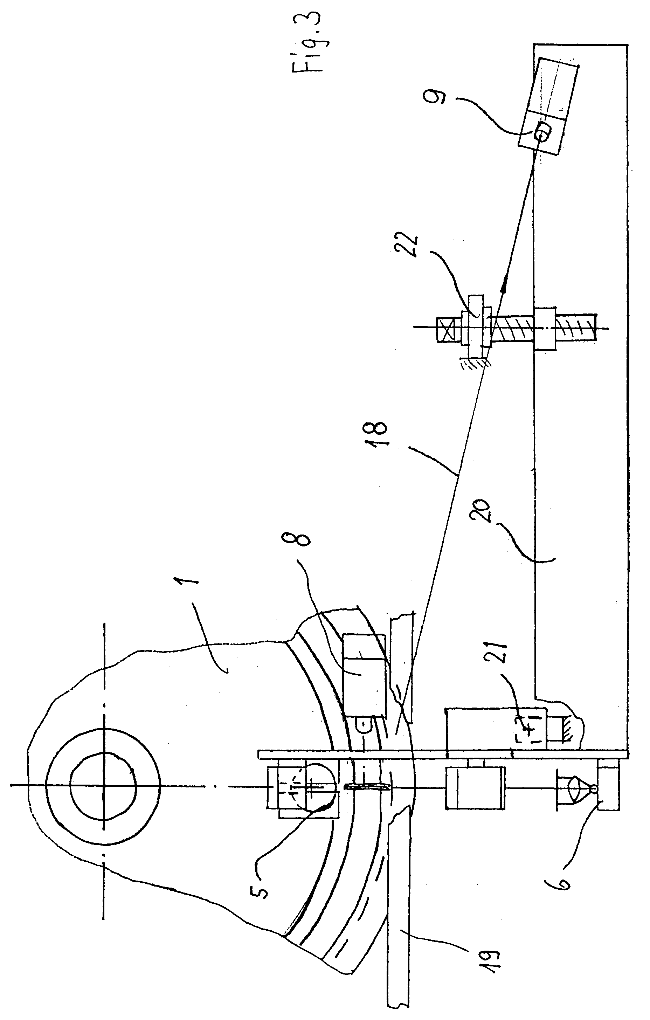

Für Einstellzwecke ist der Träger 20 an einem Drehpunkt 21 drehbar gelagert, so daß die gesamte Einrichtung zur Schiene 19 mit der Einstell- und Fixiereinrichtung 22 ausgerichtet und festgestellt werden kann. Figur 3 zeigt den Aufbau gemäß Figur 2 in der Seitenansicht, Blickrichtung c.

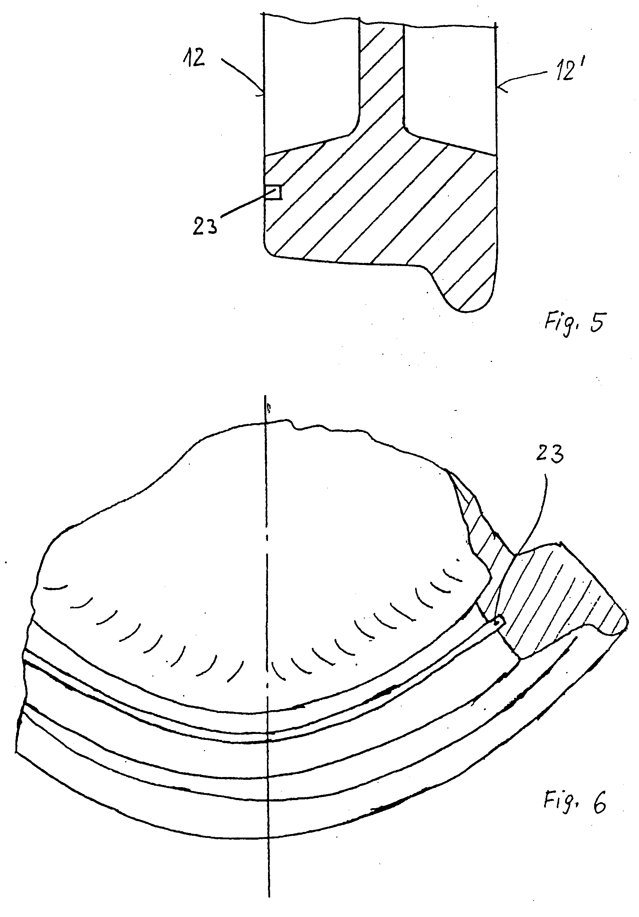

Die Figuren 5 und 6 zeigen eine Kennrille 23 in der Planfläche 12 eines Eisenbahnrades.

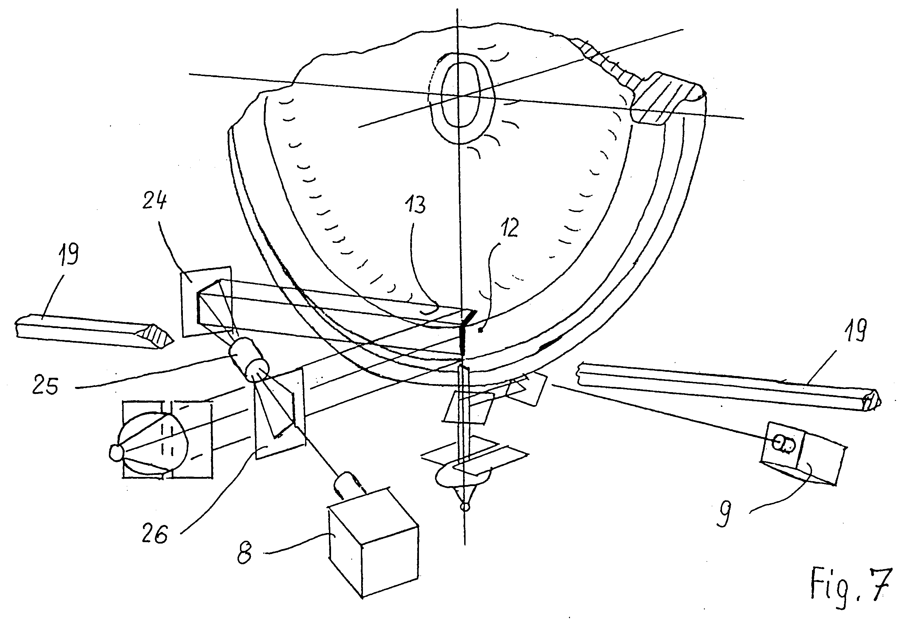

In Figur 7 ist eine Einrichtung ähnlich der Einrichtung in Figur 1 dargestellt. Die beleuchtete Kontur bzw. das remittierte Licht von der Planfläche 12 und von der Zylinder- bzw. Kegelfläche 13 wird auf dem Wege zur Kamera 8 von dem Spiegel 24 erfaßt, über eine Optik 25 auf eine Mattscheibe 26 projiziert und von dieser durch die Kamera 8 aufgenommen und abgebildet.

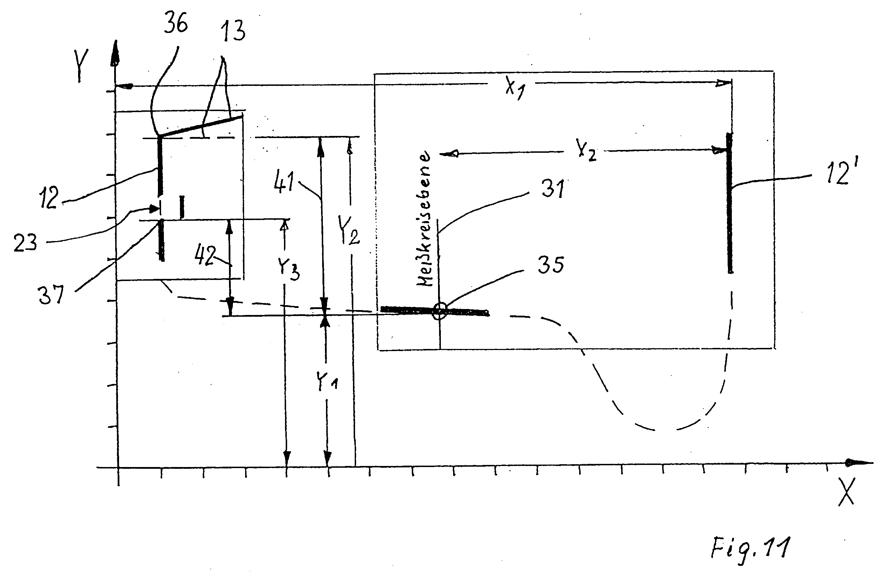

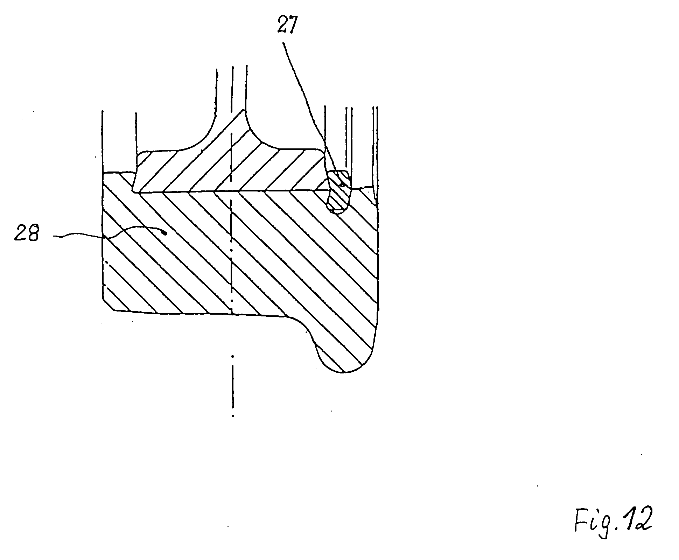

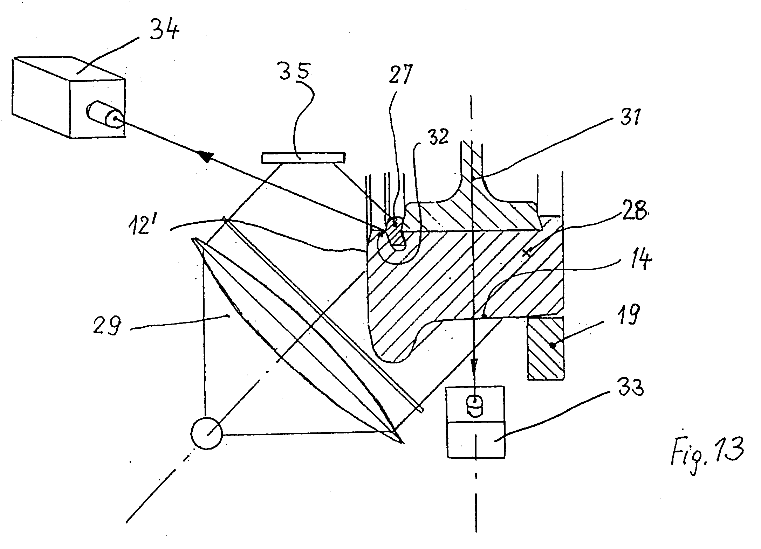

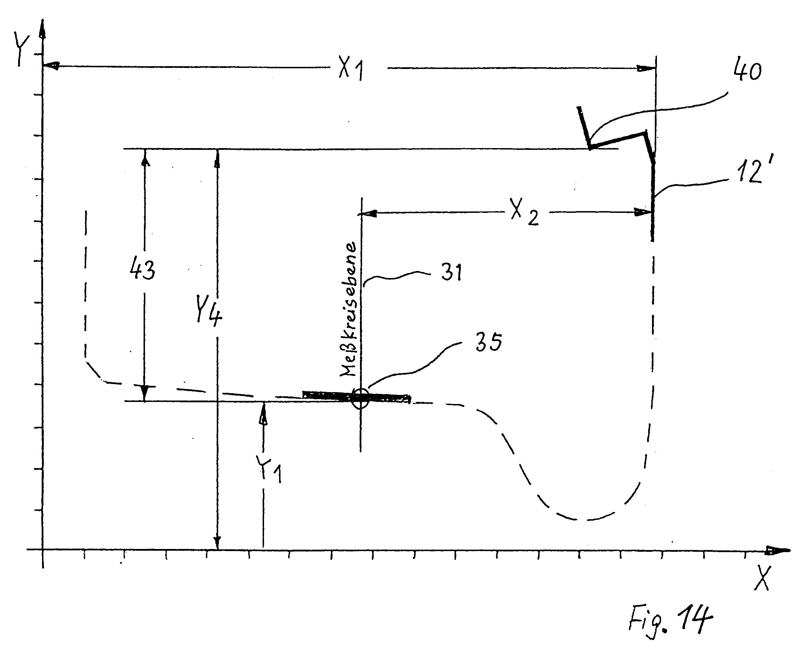

Mit diesen Zusatzgeräten gelingt es, die Abbildung auf der Mattscheibe 26 in ihrer Größe gezielt zu beeinflussen. Eine solche Beeinflussung kann günstig sein bei der Aufnahme eines eingewalzten Sprengringes 27 einer auf einem Radkörper aufgezogenen Bandage 28 (siehe Fig. 12 und 13).

Figur 13 zeigt eine Meßeinrichtung, wie sie bei der Bandagendickenmessung angewendet werden kann. Eine Beleuchtungseinrichtung 29 beleuchtet die Bandage 28 eines Rades im Bereich des Schnittpunktes Meßkreisebene 31 /Lauffläche 14, die innere Planfläche 12' eines Rades eines Radsatzes und den Bereich des Sprengringes 27 mit der Einwalzstelle 32. Der Bereich Sprengring 27/Einwalzstelle 32 wird vom Lichtstrahl der Beleuchtungseinrichtung über den Umlenkspiegel 35 erreicht. Die Kamera 33 nimmt den Bereich Lauffläche 14, Meßkreisebene 31 auf und bildet diesen Bereich ab. Die Kamera 34 erfaßt den Bereich des Sprengringes 27 und den Bereich der Einwalzstelle 32 sowie den Lichtschnitt auf der Planfläche 12'. Hiermit liegen alle Daten vor, um die vorhandene Bandagendicke zu bestimmen.

Nachfolgend soll nun der Ablauf eines Meßvorganges erläutert werden. Ein in einem Fahrzeug eingebauter Radsatz wird auf der Bewegungsebene 3, die von der oberen Fläche der Schiene 19 gebildet wird, in Richtung des Pfeils A durch die Meßstrecke 2 bewegt (Fig. 4). Für die Meßposition 4 wird der Meßvorgang von einem Schienenschalter (nicht dargestellt) ausgelöst und die Beleuchtungseinrichtungen 5, 6 erzeugen je ein schmales Lichtband, welches als Lichtkante oder Lichtschnitt 7, 7', 7'' die Planfläche 12, 12' und die Kegel- bzw. Zylinderfläche 13 sowie die Lauffläche 14 des Rades im Bereich der Meßkreisebene 31 beleuchten. Gleichzeitig mit den Beleuchtungseinrichtungen werden die Kameras 8, 9 aktiviert, die dann die Lichtschnitte 7, 7', 7'' auf den relevanten Umrißzonen des Rades aufnehmen und abbilden.

Die Signale mehrerer Kameras können von mehreren Rechnern, aber auch von nur einem Rechner verarbeitet werden. Falls die Signale mehrerer Kameras von einem Rechner verarbeitet werden sollen, ist für jede Kamera separat eine Bildsignalvorverarbeitung erforderlich. Diese Vorverarbeitung hat den Vorteil, daß der nachfolgende Aufwand beim Hauptrechner niedrig gehalten werden kann. Außerdem wird hierdurch das Zusammenschalten einer nahezu beliebigen Anzahl von Kameras möglich. Bei dieser Vorverarbeitung wird jeweils der Synchronanteil des Videosignals abgetrennt und über eine selbstregelnde Schwelle aus dem Graubild ein Binärbild erzeugt. In diesem Binärbild wird nun in jeder Zelle der Schwarz-Weiß-Übergang des Profilverlaufes detektiert und als Koordinatenwert abgespeichert. Hierzu sind etwa 40 Millisekunden erforderlich. Dieser Prozeß läuft für jede Kamera parallel und synchron ab. Dies bedeutet, daß nach einem solchen Bilddurchlauf die komplette und aufgenommene Kontur als Datensatz existiert. Diese Daten werden dann in den Hauptrechner eingelesen und in ein X, Y-Koordinatensystem eingeordnet, so daß intern im Rechner sozusagen ein Umriß des Radkranzes oder der Bandage in Konturdarstellung in dem zur Beurteilung erforderlichen Umfang entsteht, wie in Figur 11 prinzipiell dargestellt.

Die Figur 11 zeigt mit den voll ausgezogenen und gestrichelten Linien den Umriß eines Eisenbahnradprofils. Die voll ausgezogenen Linien des Umrisses sind durch ihre Einordnung in das Koordinatensystem hinsichtlich ihrer Lage und Form definierbar. Die Lage des Punktes 35, durch den die Meßkreisebene 31 verläuft, ist, ausgehend von der Planfläche 12' durch den Abstand X2 bestimmt, der in seiner Größe durch Vorschriften festgelegt ist.

Die Konturlinien werden vom Rechner in ein X,Y-Koordinatensystem eingeordnet (Figur 11). Der Abstand Y1 des Punktes 35 kann nun aus dem Koordinatensystem entnommen werden. Die Planfläche 12' ist im Abstand X1 entfernt von der Ordinate eingeordnet. Die Planfläche 12 liefert zusammen mit der Zylinder- oder Kegelfläche 13 die Kante 36. Die Kante 36 weist den Abstand Y2 von der Abszisse auf.

An einem Eisenbahnrad ohne Kennrille 23 ist die Differenz Y2 minus Y1 die Radkranzdicke 41.

An einem Eisenbahnrad mit Kennrille 23 wird der Abstand Y3 der Kante 37 ermittelt und die Differenz Y3 minus Y1 ist dann die Restdicke 42 eines Radkranzes.

Mit der eindeutig vom Rechner ermittelten Lage des Punktes 35 und der Kanten 36 und 37 im Koordinatensystem kann nun die Aussage "gut/nicht gut" und, wenn gewünscht, auch die Maßangabe der Radkranzdicke oder Restdicke ausgegeben werden. Es kann aber auch der Rechner die in seinem internen Koordinatensystem eingeordneten Konturen auf einem Bildschirm 38 als Ausgabeeinheit mit den oben genannten Maßangaben abbilden.

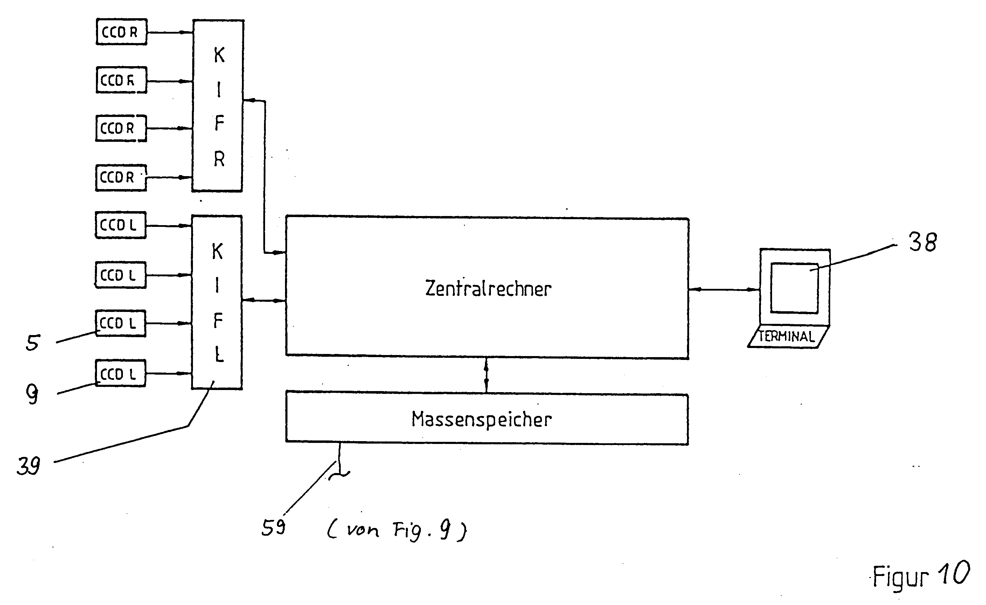

Figur 10 zeigt den schematischen Aufbau der Signalverarbeitung. Die Kameras 8 und 9 bzw. 33, 34 einer Seite der Einrichtung geben ihre Signale zur Signalverarbeitung in ein Interface 39 "KIFL-KIFR" in dem die Signalvorverarbeitung durchgeführt wird. Die Menge der ankommenden Daten wird in einem Massenspeicher abgelegt und es kommuniziert das gesamte Interface und der Massenspeicher jeweils mit dem Zentralrechner, der jeweiligen Ausgabeeinheit in Figur 10, dem Bildschirm 38, das Ergebnis zuführt.

Die durch Messung an einem mit einer Bandage, Figur 14, versehenen Rad 1 erhaltenen Daten setzen sich zusammen aus dem Konturenabschnitt "Planfläche" 12', dem Konturenabschnitt der "Ecke" 40 und dem Konturenabschnitt durch den "Punkt" 35. Es kann der Rechner wieder mit Hilfe des bekannten Abstandes X2 von der aufgenommenen Planfläche 12' auf der aufgenommenen Konturlinie der Umfangsfläche des Rades den Punkt 35 ermitteln. Der Punkt 35 ist der Ort, der in der Meßkreisebene 31 liegt. Mit dem Abstand Y1 des Punktes 35 ist die Lage des Punktes 35 in Y-Richtung bekannt. Mit Hilfe des Abstandes Y4 der Ecke 40, die der Rechner ebenfalls ermittelt, kann die Bandagendicke 43 errechnet werden.

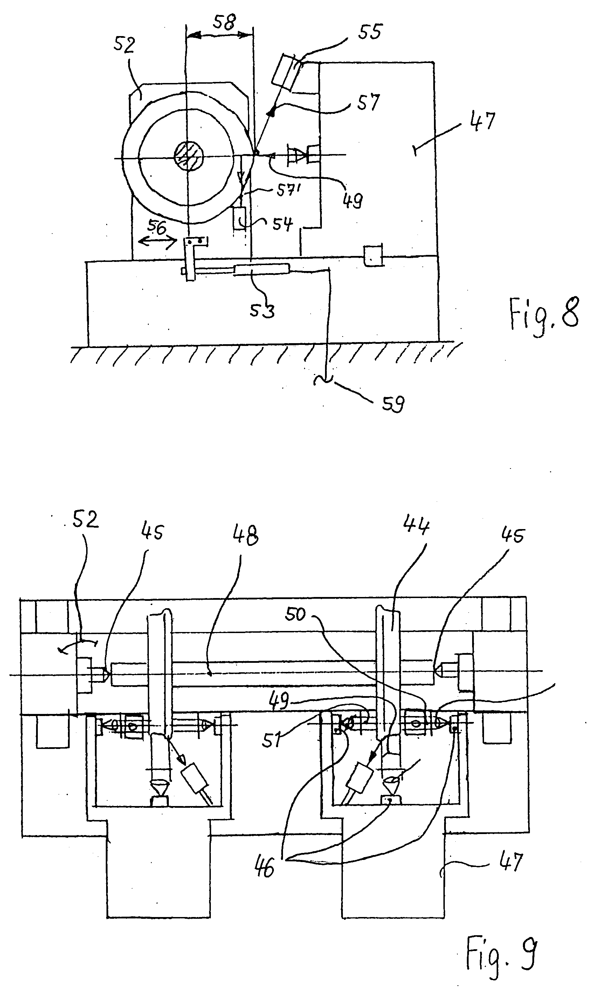

Die Erfindung kann auch auf einer Radsatzmeßmaschine (Figur 8 und 9) eingesetzt werden, bei der der Radsatz 44 mit seiner Radsatzachse beispielsweise über Körnerspitzen 45 in einer definierten Position gehalten wird (Figur 9). Diese Körnerspitzen stellen dann die Tragmittel für den Radsatz 44 dar. Die Beleuchtungseinrichtung 46, die aus mehreren Einheiten bestehen kann, ist von einem Gehäuse 47 aufgenommen und die einzelnen Einheiten sind zur Erzeugung von Lichtschnitten oder Lichtkanten so auf das Rad oder die Räder des Radsatzes gerichtet, daß die für eine bestimmte Dicke relevanten Umrißzonen des Rades beleuchtet werden zur Erzeugung der oben schon beschriebenen Lichtschnitte oder Lichtkanten. Die Anordnung ist hierbei so, daß die Lichtstrahlen 50, 51 je einen radial zur Rotationsachse 48 gerichteten Lichtschnitt oder eine Lichtkante erzeugen.

Der Radsatz` der in einem Meßschlitten 52 von Körnerspitzen aufgenommen ist, wird mit dem Meßschlitten in eine Meßposition gefahren. Über eine Wegmeßeinrichtung 53 kann dann noch zusätzlich eine Aussage über den Raddurchmesser erhalten werden.

Das von der Umfangsfläche des Rades remittierte Licht wird von den Kameras 54, 55 aufgenommen und es werden von den Kameras die entsprechenden Digitalsignale an die Auswerteeinrichtung nach Figur 10 weitergeleitet. Der mit den Körnerspitzen 45 aufgenommene Radsatz kann beispielsweise mit dem Meßschlitten 52 durch Verschiebung in Richtung des Pfeils 56 in die gewünschte Meßposition gebracht werden. Die gewünschte Meßposition ist die Position, in der auf der Radumfangsfläche des Rades Lichtschnitte oder Lichtkanten erzeugt werden, die in der Zurücksenderichtung 57, 57' von den Kameras aufgenommen werden können. In jedem Fall aber kann die exakte Position des Radsatzes festgestellt werden und ist damit bekannt. Ist die Meßposition erreicht, so wie in Figur 8 dargestellt, entsteht in den Abbildungsebenen der Kameras 54, 55 das gewünschte Konturenbild und es werden die erforderlichen Digitalsignale an die Auswerteeinrichtung Figur 10 weitergeleitet. Da die exakte Position des Radsatzes in der Meßposition festgestellt werden kann und somit bekannt ist, kann über das Wegmeßsystem 53 die Entfernung 58 der Rotationsachse 48 des Radsatzes 44 von der Meßposition ermittelt werden. Damit ist der Radius des Rades bekannt und somit der Durchmesser des Rades.

Um die Meßposition schnell und problemlos einzustellen, wird während des Verfahrens mit dem Meßschlitten 52 über die Kamera 55 die Umfangsfläche des Rades angepeilt. Die Position, in der der Lichtschnitt oder die Lichtkante exakt zu erkennen ist, ist die richtige Meßposition.

Die Kontrolle der Positionierung des Radsatzes beim Verfahren zum Erreichen der Meßposition kann über die Kamera 55 erleichtert und automatisiert werden, wenn ein bestimmter Punkt auf der Abbildungsebene der Kamera 55 als Schaltpunkt verwendet wird. Diese Abbildungsebene wird von einer als Digitalisierungseinrichtung arbeitenden Sensorplatte gebildet, die vollständig ausgefüllt ist mit sog. Pixeln. Diese sind sehr eng in Zeilen und Spalten geordnet und bilden damit eine Matrix. Jedes Pixel kann ganz allgemein auf Licht oder auf Licht bestimmter Frequenz oder Intensität durch eine Veränderung des Spannungszustandes reagieren. Wird nun während des Einfahrens in die Meßposition die Abbildungsoptik der Kamera geöffnet und die Beleuchtungseinrichtung eingeschaltet, so wandert ein Konturenbild der Radumfangsfläche auf der Abbildungsebene und verändert den Spannungszustand der Pixel. Dieses kann jedoch vom Rechner ignoriert werden, solange nicht ein definiertes Pixel oder eine definierte Pixelzeile den Spannungszustand geändert hat. Wird dieses Pixel oder diese Pixelzeile beispielsweise in die Mitte der Abbildungsebene gelegt, so kann dann, wenn die abgebildetete Kontur diese Pixel oder diese Pixelzeile erreicht hat, und dieser Rixel oder diese Pixelzeile dadurch im Spannungszustand geändert wird, der Rechner aktiviert werden, der die Bewegung des Meßschlittens 52 stoppt und die Daten der Wegmeßeinrichtung 53 über die Verbindungsleitung 59 übernimmt und die Kameras 54, 55 ausliest.

### Liste der verwendeten Bezugszeichen

- 1: Rad
- 2: Meßstrecke
- 3: Bewegungsebene
- 4: Meßposition
- 5: Beleuchtungseinrichtung
- 6: Beleuchtungseinrichtung
- 7, 7', 7'': Lichtschnitt
- 8: Kamera
- 9: Kamera
- 10: Lichtstrahl
- 11: Lichtstrahl
- 12, 12': Planfläche
- 13: Kegel, Zylinderfläche
- 14: Lauffläche
- 15: Spiegel
- 16: Spiegel
- 17: optische Achse
- 18: optische Achse
- 19: Schiene
- 20: Träger
- 21: Drehpunkt
- 22: nicht belegt
- 23: Einstell- und Fixiereinrichtung
- 24: Spiegel
- 25: Optik
- 26: Mattscheibe
- 27: Sprengring
- 28: Bandage
- 29: Beleuchtungseinrichtung
- 30: nicht belegt
- 31: Meßkreisebene
- 32: Einwalzstelle
- 33: Kamera
- 34: Kamera
- 35: Punkt
- 36: Kante
- 37: Kante
- 38: Bildschirm
- 39: Interface
- 40: Ecke
- 41: Radkranzdicke
- 42: Restdicke
- 43: Bandagendicke
- 44: Radsatz
- 45: Körnerspitzen
- 46: Beleuchtungseinrichtung
- 47: Gehäuse
- 48: Rotationsachse
- 49: Lichtstrahl
- 50: Lichtstrahl
- 51: Lichtstrahl
- 52: Meßschlitten
- 53: Wegmeßeinrichtung
- 54: Kamera
- 55: Kamera
- 56: Pfeil
- 57: Zurücksenderichtung
- 58: Entfernung
- 59: Verbindungsleitung

## Patentansprüche

1. Verfahren zur Dickenbestimmung an Radkränzen oder Bandagen von Rädern von Eisenbahnradsätzen, dadurch gekennzeichnet, daß die für eine zu bestimmende Dicke relevanten Umrißzonen des Rades je mittels eines Lichtschnittes oder einer Lichtkante beleuchtet und die hierdurch entstehende Lichtspur optisch erfaßt, anschließend digitalisiert und aus den digitalisierten Werten die Dicke bestimmt wird.

2. Einrichtung zur Dickenbestimmung an Radkränzen oder Bandagen von Rädern von Eisenbahnradsätzen zur Durchführung des Verfahrens nach Anspruch 1, gekennzeichnet durch Mittel (19,45) zum Tragen des Eisenbahnradsatzes sowie durch mindestens eine Beleuchtungseinrichtung (5,6,29,46) zur Erzeugung eines Lichtschnittes (7,7',7'') oder einer Lichtkante und mindestens eine für die Erfassung des Lichtschnittes oder der Lichtkante zugeordnete Empfangsoptik (8,9,33,34,54,55), die mit einer Digitalisierungseinrichtung und einer Auswerteeinrichtung verbunden ist, wobei jede Beleuchtungseinrichtung mit der zugeordneten Empfangsoptik relativ zu den Mitteln (19,45) zum Tragen des Eisenbahnradsatzes so angeordnet sind, daß die für eine zu bestimmende Dicke relevanten Umrißzonen mit dem Lichtschnitt oder der Lichtkante beleuchtbar sind.
